# EUROPEAN PATENT APPLICATION

(11) **EP 2 541 730 A1**
(43) Date of publication of application: **02.01.2013**
(21) Application number: 11305823.4
(22) Date of filing: 28.06.2011
(51) Int. Cl.: H02J 7/02, B60L 5/00

(54) **A method, a system, a server, a computer program and a computer program product for transferring power inductively in particular for charging a moving battery**

(71) Applicant: Alcatel Lucent, 75007 Paris (FR)
(72) Inventor: Templ, Wolfgang, 74372 Sersheim (DE); Wasserziehr, Andreas, 65812 Bad Soden (DE)
(74) Representative: Kleinbub, Oliver

(57) **Abstract**

The invention concerns a method for transferring electrical power inductively, in particular for charging a moving battery, wherein electrical power is transferrable between a primary coil and a secondary coil when said secondary coil is arranged relative to said primary coil in a way allowing inductive interaction between said secondary coil and said primary coil, wherein said electrical power is transferrable if said primary coil is switched to be connected to a power grid and wherein said electrical power is not transferrable if said primary coil is switched to be disconnected from said power grid, comprising the steps of
- testing whether a condition for granting the transfer of power, in particular an authorization of an identification by a server, is met, and
- switching at least two primary coils, depending on the result of a single test of said condition.

## Description

### Field of the invention

The invention relates to a method, a system, a server, a computer program and a computer program product for transferring power inductively, e.g. between multiple primary coils and a secondary coil for inductively charging or discharging a moving electrical battery.

### Background

In an implementation capable of inductively charging a moving electrical battery multiple primary coils to control supplying power are placed adjacently. For charging said battery a secondary coil connected to said battery is moved for example together with said electrical battery over multiple of said primary coils. Upon entry of said secondary coil into the area of one of the primary coils typically an identification of said battery or said secondary coil is required in order to transmit technical data regarding the control of the charging or allow billing of the power transferred between said primary coil and said secondary coil.

However, when moving said electrical battery or said secondary coil quickly, the time period said is available for confirming the identity of said moving electrical battery or said secondary coil is very short. Furthermore, when using multiple primary coils, the identification has to be repeated for each entry of said secondary coil into the area of each of said primary coils.

### Summary

The object of the invention is to provide a solution for transferring power between said primary coils and said secondary coil enabling authorization and tracking for fast movement of said secondary coil relative to said primary coils, e.g. for billing purposes. Such power transfer is usable for transferring power between multiple primary coils embedded in a road and a secondary coil connected to a battery for inductively charging or discharging a moving electrical battery at high speeds, e.g. for of an electrical vehicle on the Autobahn.

The main idea of the invention is to transfer electrical power inductively, in particular for charging a moving battery, wherein electrical power is transferrable between a primary coil and a secondary coil when said secondary coil is arranged relative to said primary coil in a way allowing inductive interaction between said secondary coil and said primary coil, wherein said electrical power is transferrable if said primary coil is switched to be connected to a power grid and wherein said electrical power is not transferrable if said primary coil is switched to be disconnected from said power grid, comprising the steps of
- testing whether a condition for granting the transfer of power, in particular an authorization of an identification by a server, is met, and
- switching at least two primary coils, depending on the result of a single test of said condition.

This way instead of determining authorization for each primary coil individually, authorization for granting the transfer of power is determined only once for multiple primary coils. This saves time and reduces data traffic on the data links. This is in particular important when the second coil moves with high speed relative to the primary coils or multiple second coils move over the primary coils one after another quickly. In case of electric vehicles, moving at high speed would not allow time for individual coil authorization for example on the Autobahn.

Advantageously said at least two primary coils are switched depending on the result of an authentication, in particular of said identification by said server. Authentication improves security and prevents fraud. Time lag due to authentication may be too long when moving at high speeds, hence switching multiple primary coils depending on the result of a single authentication improves performance of the power transfer when said secondary coil is moving at high speed compared to said first coils.

Advantageously said at least two primary coils are switched depending on the result of a prediction of a position of said secondary coil relative to at least one of said at least two primary coils, in particular by said server. Prediction may additionally or alternatively to authentication increase the fraud resistance of the system. At the same time, prediction may be used instead of any other means for determining said the position of the secondary coil and the primary coil are aligned properly for switching the primary coil.

Advantageously information for said prediction, in particular about a position, direction or speed of a vehicle comprising said secondary coil is received, in particular by said server. The prediction is this way based on reliable data.

Advantageously said secondary coil is connected to a battery and information regarding said battery is received, in particular by said server. For charging a moving battery, information regarding the charging e.g. about the battery or a charging system in said electrical vehicle is used to improve the charging.

Advantageously a system for transferring electrical power inductively, comprising a server and at least two primary coils is implemented to increase interoperability of server and primary coils and hence reliability.

Further developments of the invention can be gathered from dependent claims and the following description.

### Brief description of the figures

In the following the invention will be explained further making reference to the attached drawings.
Figure 1 schematically shows a part of a system for inductively charging a moving electric battery.
Figure 2 schematically shows a flowchart showing some typical steps in a method for inductively charging a moving electrical battery.

### Description of the embodiments

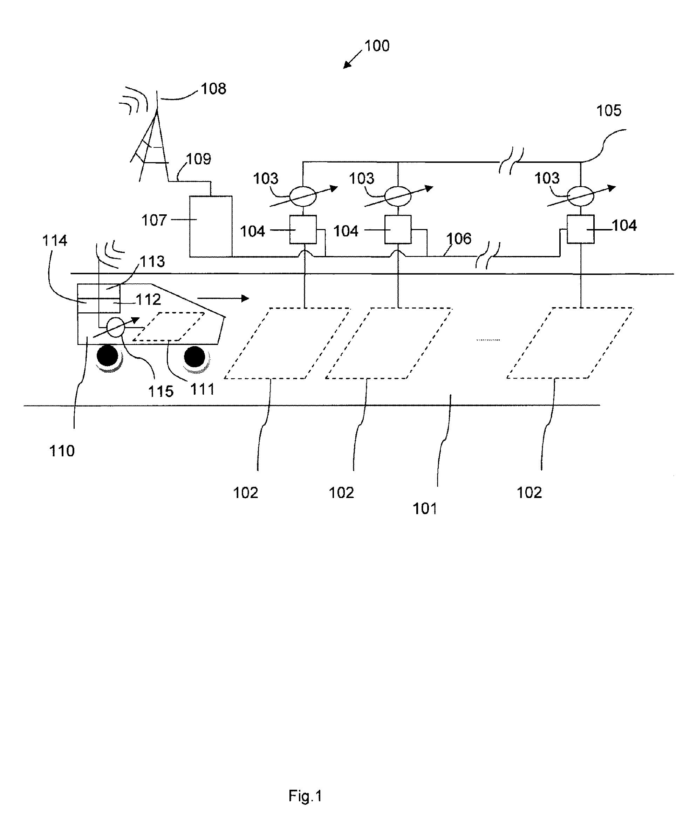

Figure 1 shows a part of a system for inductively charging a moving electrical battery. Said system 100 comprises a road 101 and multiple primary coils 102 that are embedded in said road.

According to the example each of said primary coils 102 is connected to a power measurement unit 103. Alternatively more than one primary coil 102 may be connected to the same power measurement unit 103.

Furthermore said primary coils 102 are each connected via a separate power supply and control unit 104 to a power supply line 105.

Said primary coils 102 said power measurement units 103 and said power supply and control units 104 are according to the example connected to a single power supply line 105.

Alternatively said power supply and control unit 104, said power measurement units 103 or said primary coils 102 may be connected to individual power supply lines 105.

Alternatively more than one primary coil 102 may be connected to the same power supply and control unit 104.

Said power lines are for example wires leading to an electric power plant or a local power grid.

Furthermore said power supply and control units 104 are connected to a server 107 via a data link 106.

Said system 100 is adapted to interact with an electric vehicle 110, for example an electrical car. Said system 100 in the example comprises an antenna 108 according to the example mounted on an antenna tower. Said antenna 108 is connected via a data link 109 to said server 107. Alternatively or additionally said system 100 may comprise means for inductive data transfer via one or more of said primary coils 102.

Said data links 106, 109 are for example a local area network (LAN), wireless local area network (WLAN, 802.11n) or wide area network (WAN). Said connection is for example according to the well known internet protocol (IP), user datagram protocol (UDP), transmission control protocol (TCP) or stream control transmission protocol (SCTP). Signaling is for example according to the well known Simple Object Access Protocol (SOAP), Representational State Transfer (REST) or session initiation protocol (SIP) or Internet Protocol Multimedia Subsystem (IMS). Addressing may be done using the well known uniform resource locators (URL), uniform resource identifiers (URI), names or namespaces of extensible markup language (XML Version 1.0, Third Edition, W3C Recommendation 8 December 2009).

The connection can but must not be directly between the devices. The typical use is on wide area networks with multiple intermediate devices where only a server 107 is depicted in figure 1.

Said electrical vehicle 110 comprises a secondary coil 111, a controller 112, a communication device with antenna 113 and a battery 114. Furthermore, said electrical vehicle 110 comprises a power measurement unit 115.

Said secondary coil 111 is for example connected to said controller 112 via said power measurement unit 115. Said communication device with antenna 113 is for example connected to said controller 112 via a data link. Said battery 114 is for example connected to said secondary coil 111 via said controller 112 and said power measurement unit 115.

Said controller is adapted to determine the characteristic of said battery 114, for example a charging state, in particular using readings from said power measurement unit 115.

Additionally said controller 112 is adapted to determine a load characteristic, for example a current charging current. Said controller 112, for example, determines said current charging current from measurements of said power measurement unit 115.

Furthermore said controller 112 is adapted to determine a charging request message and to send said charging request message via said communication device with antenna 113.

Said communication device with antenna 113 is for example adapted to communicate with said server 107 via said antenna 108 and said data link 109 using the well known long term evolution standard. Alternatively any other type of wireless communication like WLAN may be used.

In case of inductive data transfer no communication device with antenna 113 is required. Instead or additionally said electrical vehicle 110 is in that case adapted to transfer data via said secondary coil 111.

Said charging request message for example comprises an identification of said electrical vehicle 110. Said identification is for example stored on a storage in said controller 112. Said identification is for example a unique identifier of said vehicle, e.g. a vehicle identification number (well known as VIN).

Optionally said charging request message may comprise technical data regarding charging, e.g. the configuration of said electric vehicle 110 for example a battery type and a maximum charging capacity of said battery 114. Furthermore said technical data may comprise information related to charging said battery 114, e.g. about a status of said battery 114 or said charging system or circuitry. For example said status related information may be a maximum allowed charging current.

Optionally said charging request message may comprise authentication information for example a signature for authenticating said identification of said electrical vehicle 110. Said signature may be a signature according to the pretty good privacy algorithm.

Optionally said charging request message may comprise information about the current position, direction or speed of said electric vehicle 110. For example said position is a current global positioning system coordinate (well known as GPS) of the electric vehicle 110. In this case said electrical vehicle 110 comprises a GPS receiver adapted to determine and provide said position, direction or speed information to said controller 112. Alternatively said position may be determined by said controller 112 by wireless triangulation using said communication device with antenna 113.

Said direction may be determined for example by said controller 112 using said global positioning system coordinate or said position from said wireless triangulation.

Equivalently said speed of said electrical vehicle 110 may be determined using said global positioning system coordinate or said wireless triangulation data.

Said server 107 is adapted to receive said charging request message. Furthermore said server 107 is adapted to authorize charging or discharging of said battery 114. To that end said server 107 comprises for example a database with identifications of all vehicles that may be authorized to be charged by said primary coils 102.

Furthermore said server 107 may be adapted to determine appropriate charging sequences depending on said technical data received with said charging request message. For example said server 107 is adapted to determine a target charging current for said primary coils. Said target charging current is for example determined by said server 107 from a look up table mapping the technical data received from said electrical vehicle 110 to a target charging current.

Alternatively or additionally said technical data regarding charging may contain said target charging current directly. In this case said server 107 is adapted to implement the received target charging current.

Furthermore said server 107 may be adapted to authenticate said identification of said electrical vehicle 110 using said authentication information received with said charging request message. For example said server 107 is adapted to confirm authenticity of said pretty good privacy signature received with said identification of said electric vehicle 110 in said charging request message using a public key stored in said database for said identification of said electric vehicle 110.

Furthermore said server 107 may be adapted to determine primary coil locations and estimate times of arrival of said electrical vehicle 110 at the determined primary coil locations. This means that said server 107 may be adapted to predict which of said primary coils 102 shall be authorized to charge said battery 114 and at what times.

Said the arrival time of said electrical vehicle 110, i.e. said secondary coil 111, in the area of selected primary coils 102 is predicted depending for example on current position direction or speed of said electric vehicle 110 and of the primary coil 102 in question. To that end positions of primary coils 102 and the dimensions of said primary coils 102 are stored in said database. Dimensions and mounting position of said secondary coil 111 are for example received with said technical data from said electrical vehicle 110 with said position information of said electrical vehicle 110.

For example said server 107 is adapted to determine said battery 114 to be authorized for charging or discharging via said secondary coil 111 in an entire section of said road 101 comprising multiple primary coils 102.

Alternatively or additionally radio frequency identification devices tags, well known as RFID tags may be mounted on said electric vehicle 110. In this case said system 100 comprises radio frequency identification tag readers mounted for example in said road 101 for each of said primary coils 102. Said radio frequency identification tag readers are in this case connected to said power supply and control units 104. In this case said power supply and control units 104 are adapted to activate the attached primary coil 102 if the radio frequency identification tag reader for the primary coil 102 reads the identification of an electrical vehicle 110 from its radio frequency identification device tag that is already authorized by said server 107 for charging said battery 114 via said secondary coil 111.

Said system 100 may be adapted to identify approaching electrical vehicles before they reach a first primary coil 102 of the primary coils 102. In the example of said road 101 comprising multiple primary coils 102, the first primary coil 102 is for example the primary coil 102 that said electrical vehicle 110 reaches first when driving in the prescribed driving direction on a lane of said road 101 having installed said multiple primary coils 102.

In this case said server 107 is for example adapted to send authorization for all primary coils that are determined to be authorized for charging said electrical vehicle 110 to the appropriate power supply and control units 104 via said data link 106. This means that said authorization for charging said battery 114 is sent by said server 107 to all affected power supply and control unit 104 at the same time. Therefore upon arrival of said electric vehicle 110 and hence said secondary coil 111 in the area of any of said primary coils 102 no further authentication has to be determined.

Alternatively said system 100 may be adapted to identify approaching electrical vehicles while they are already passing one or more of said primary coils 102. To that end for example one or more radio frequency identification tag readers may be installed near said first primary coil 102. Alternatively or additionally said first primary coil 102 or said first primary coil 102 and one or more additional primary coils 102 may be used for inductively transferring information about the identification of an passing electrical vehicle. In this case said server 107 may be adapted receive said identification information from the respective primary coils 102 or radio frequency identification readers and to send said authorization message as soon as it is determined to the selected primary coils 102. Said antenna 108, said communication device with antenna 113 and the respective data links are in that case not required.

In the example of the driving electrical vehicle, for example at least two primary coils 102, e.g. all primary coils 102 that will be passed by said electrical vehicle when driving on a lane of said road 101, are authorized by a single authorization test.

Said server 107 may be adapted to perform at least parts of the function of the power supply and control unit 104, e.g. as a control equipment mounted near said road 101. In this case said power supply and control unit 104 may be a switch that is toggled upon receipt of an electrical signal from said server 107.

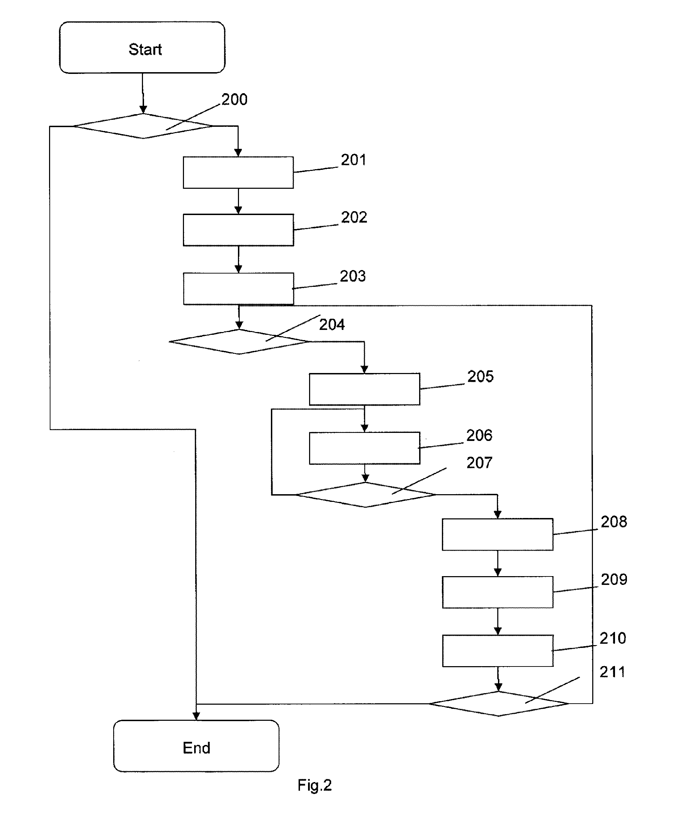

A method for controlling inductive flow, i.e. transferring power inductively, between primary coils 102 and a secondary coil 111 that are moving with respect to each other is explained making reference to figure 2 and using the example of inductively charging a battery on a moving electrical vehicle 110. Said method is applicable to any power transfer direction between said primary coils 102 and said secondary coil 111. Multiple secondary coils 111 may be used likewise.

Said method starts for example upon receipt of a charging request from said electrical vehicle 110.

After the start a step 200 is executed.

In said step 200 a test is performed to determine whether a condition for granting the transfer of power is met. Said condition is for example given if the identification received in said charging request message is in said database, hence identifying said electrical vehicle 110 as a valid user of the system 100 for charging said battery inductively. If said identification is found in said database said condition is met and step 201 is executed. Otherwise no data related to said electrical vehicle 110 is found and said method ends.

Optionally said authentication test is performed in said step 200 to ensure said the identification received in said charging request message is actually authenticated. In this case said message ends if said authentication test fails.

In said step 201 locations of suitable primary coils 102 for a charging said moving electrical battery are determined. For example said locations are predicted depending on said current position, direction or speed of said electrical vehicle 110.

Furthermore estimated times of arrival of said vehicle 110 at individual locations of said suitable primary coils 102 may be determined or predicted depending on said current position, direction or speed of said electrical vehicle 110.

Additionally information from a roadmap of said road 101 may be used to determine or predict the position of said first coils 102 or estimated times of arrival.

Afterwards step 202 is executed.

In said step 202 primary coils 102 for which said vehicle is authorized are determined. For example all coils on a predetermined road segment close to the location where the charging request message was received are determined for example from said roadmap.

Additionally or alternatively in the case said step 201 was executed said primary coils 102 may be determined as said predicted primary coils 102.

Furthermore an authorization message is determined in said step 202. Said authorization message may be a single authorization message having the same content for all recipients. Alternatively or additionally multiple authorization messages, e.g. one for each of said primary coils 102 or one for each selected primary coil 102 may be determined. Individual authorization messages may contain specific information about estimated time of arrival or switching condition for each of said primary coils 102.

Said authorization message for example comprises said identification of said electrical vehicle 110. Optionally said authorization message may comprise information about said estimated time of arrival for the individual coil 102, said technical data or said authentication information.

Afterwards a step 203 is executed.

In said step 203 said authorization message is sent. For example the same authorization message is sent to said power supply and control units 104 of said primary coils 102 that were determined in step 202. Alternatively said individual authorization messages are sent.

Afterwards a step 204 is executed.

In said step 204 it is determined whether said primary coil 102 may be switched, i.e. connected to the power supply 105 on or not. For example each power supply and control unit 104 determines for the primary coil 102 it is connected to whether to connect to the power supply 105 or not.

According to the invention said primary coil 102 is only switched to connected state if said authorization message has been received by said power supply and control unit 104. This way no primary coil 102 is connected to said power supply without authorization. Said authorization message is sent by said server 107 after a single test of authorization. Hence said authorization is done only once and for a moving secondary coil 111, at least two primary coils 102 are switched based on the result of a single authorization.

Additionally said determination is for example based on said predicted time received in said authorization message.

Alternatively or additionally said radio frequency identification tag readers installed close to the individual primary coils 102 are used to monitor the area around said primary coils 102 for approaching radio frequency identification tags. In this case said radio frequency identification tags are mounted to each of electrical vehicle 110 participating. Hence, said power supply and control unit 104 is adapted to determine whether to connect said primary coil 102 or not from information read by said radio frequency identification reader from an approaching electrical vehicle radio frequency identification tag and from the contents of the received authorization message. For example said power supply control unit 104 is adapted to power on said primary coil 102 only if said identification from said radio frequency identification tag matches said identification received in said authorization message.

When using prediction for example photo electric sensors or contact loops close to said individual primary coils 102 may be used to confirm said electrical vehicle 110 is actually approaching said primary coil 102. Radio frequency identification tag reading may be used for prediction case as well. Time of arrival may be measured in order to refine prediction.

In case it was determined to connect said primary coil 102 a step 205 is executed otherwise said step 204 is executed.

Said step 204 is executed once for each of said primary coils 102 and repeated until for all primary coils 102 the switching has been determined. Authorization is tested only once for all of said primary coils 102 outside of said step 204. No additional authorization request has to be sent to said server 107. The speed of the calculation of step 204 is therefore increased by less performed operations and less latency for additional data traffic.

Optionally a time out condition may be monitored before executing said step 204 again, in order to end said method in case an electrical vehicle 110 does not arrive at a predetermined primary coil 102 within the predicted time interval or a predetermined time interval, for example 10 seconds.

In said step 205 said power measurement unit 103 is started to measure power consumption for said vehicle identified by said identification.

Afterwards step 206 is executed.

In said step 206 said primary coil 102 is connected to said power supply 105. In case said primary coil 102 is already connected, for example - due to another electrical vehicle having arrived at said primary coil 102 previously, said primary coil 102 is kept connected. For billing for more than one electrical vehicle this is considered by splitting up the amounts according to the consumed power.

Afterwards a step 207 is executed.

In said step 207 a test is performed to determine if said electrical vehicle 110 has left the area of said primary coil 102. For example the movement of said secondary coil 111 over the area of said primary coil 102 is monitored by sampling an electrical current profile while inductively transferring power. In case it is determined that said electrical vehicle 110 left the area of said coil 102, e.g. by changes to the sampled electrical current, a step 208 is executed, otherwise said step 207 is executed.

In said step 208 said primary coil 102 is disconnected if no other vehicle has been detected on said primary coil 102. Afterwards a step 209 is executed.

In said step 209 information from said power measurement unit 203 is used to determine and send the amount of power consumed by said electrical vehicle 110 while moving over said primary coil 102. For example meter readings are subtracted to determine said power consumed by said electrical vehicle 110. Said power consumed is for example assigned to said identification of said electrical vehicle 110 afterwards. Information about said consumed power is sent for example in a further message from said power supply and control unit 104 to said server 107 via said data link 106. Afterwards a step 210 is executed.

In said step 210 said information about the power consumed by said vehicle 110 is stored for example in said database and assigned to said identification of said electrical vehicle 110 for later billing. For example said power consumed is added to other previous values already stored for said electrical vehicle 110 from other of said primary coils 102 in said database. Afterwards step 211 is executed.

In said step 211 a test is performed to determine if the power consumption information of all of said predetermined primary coils 102 has been received. In case the power consumption information of all of said predetermined primary coils 102 has been received said method ends, otherwise said step 204 is executed.

Optionally a time out condition may be monitored before executing said step 204 again, in order to end said method in case an electrical vehicle 110 does not arrive at a predetermined primary coil 102 within the predicted time interval or a predetermined time interval, for example 100 seconds.

Instead of sending said authorization message and performing said evaluation of consumed power in said power supply and control unit 104, electrical signals may be used to toggle said switch of said power supply and control unit 104. In this case said server 107 is adapted to perform the required steps, e.g. reading said meter readings from electrical input signals from said power measurement unit 103. Said authorization in this case is done only once and at least two of said primary coils 102 are switched based on the result of this single authorization.

Said method may be implemented as a computer program distributed on said server 107 and said power supply control units 104. A computer program product may be used to store said computer program.

The description and drawings merely illustrate the principles of the invention. It will thus be appreciated said those skilled in the art will be able to devise various arrangements said, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art said any block diagrams herein represent conceptual views of illustrative circuitry embodying the principles of the invention. Similarly, it will be appreciated said any flow charts and the like represent various processes which may be substantially represented in computer readable medium and so executed by a computer or processor, whether or not such computer or processor is explicitly shown.

A person of skill in the art would readily recognize said steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for transferring electrical power inductively, in particular for charging a moving battery, **wherein** electrical power is transferrable between a primary coil (102) and a secondary coil (111) when said secondary coil (111) is arranged relative to said primary coil (102) in a way allowing inductive interaction between said secondary coil (111) and said primary coil (102), wherein said electrical power is transferrable if said primary coil (102) is switched to be connected to a power grid and wherein said electrical power is not transferrable if said primary coil (102) is switched to be disconnected from said power grid, comprising the steps of
- testing (200) whether a condition for granting the transfer of power, in particular an authorization of an identification by a server (107), is met, and
- switching (204) at least two primary coils (102), depending on the result of a single test of said condition.

2. The method according to claim 1, wherein said at least two primary coils (102) are switched (204) depending on the result of an authentication, in particular of said identification by said server (107).

3. The method according to claim 1, wherein said at least two primary coils (102) are switched (204) depending on the result of a prediction of a position of said secondary coil (111) relative to at least one of said at least two primary coils (102), in particular by said server (107).

4. The method according to claim 3, wherein information for said prediction, in particular about a position, direction or speed of a vehicle (110) comprising said secondary coil (111) is received, in particular by said server (107).

5. The method according to claim 1, wherein said secondary coil (111) is connected to a battery (114) and wherein information regarding charging of said battery is received, in particular by said server (107).

6. A server (107) for transferring electrical power inductively, in particular for charging a moving battery, **wherein** electrical power is transferrable between a primary coil (102) and a secondary coil (111) when said secondary coil (111) is arranged relative to said primary coil (102) in a way allowing inductive interaction between said secondary coil (111) and said primary coil (102), wherein said electrical power is transferrable if said primary coil (102) is switched to be connected to a power grid and wherein said electrical power is not transferrable if said primary coil (102) is switched to be disconnected from said power grid, wherein said server (107) is adapted to
- test (200) whether a condition for granting the transfer of power, in particular an authorization of an identification, is met, and
- switch (204) at least two primary coils (102), depending on the result of a single test of said condition.

7. A system (100) for transferring electrical power inductively, in particular for charging a moving battery, comprising a server (107) and at least two primary coils (102), **wherein** electrical power is transferrable between a primary coil (102) and a secondary coil (111) when said secondary coil (111) is arranged relative to said primary coil (102) in a way allowing inductive interaction between said secondary coil (111) and said primary coil (102), wherein said electrical power is transferrable if said primary coil (102) is switched to be connected to a power grid and wherein said electrical power is not transferrable if said primary coil (102) is switched to be disconnected from said power grid, wherein said server (107) is adapted to
- test (200) whether a condition for granting the transfer of power, in particular an authorization of an identification, is met, and
- switch (204) at least two primary coils (102), depending on the result of a single test of said condition.

8. A computer program for transferring electrical power inductively, in particular for charging a moving battery, **wherein** electrical power is transferrable between a primary coil (102) and a secondary coil (111) when said secondary coil (111) is arranged relative to said primary coil (102) in a way allowing inductive interaction between said secondary coil (111) and said primary coil (102), wherein said electrical power is transferrable if said primary coil (102) is switched to be connected to a power grid and wherein said electrical power is not transferrable if said primary coil (102) is switched to be disconnected from said power grid, comprising the steps of, wherein said computer program, when executed on a computer, causes the computer to
- test (200) whether a condition for granting the transfer of power, in particular an authorization of an identification by a server (107), is met, and
- switch (204) at least two primary coils (102), depending on the result of a single test of said condition.

9. A computer program product for transferring electrical power inductively, in particular for charging a moving battery, comprising a computer usable medium having a computer readable program, **wherein** electrical power is transferrable between a primary coil (102) and a secondary coil (111) when said secondary coil (111) is arranged relative to said primary coil (102) in a way allowing inductive interaction between said secondary coil (111) and said primary coil (102), wherein said electrical power is transferrable if said primary coil (102) is switched to be connected to a power grid and wherein said electrical power is not transferrable if said primary coil (102) is switched to be disconnected from said power grid, wherein said computer readable program, when executed on a computer, causes the computer to
- test (200) whether a condition for granting the transfer of power, in particular an authorization of an identification by a server (107), is met, and
- switch (204) at least two primary coils (102), depending on the result of a single test of said condition.
